# EUROPÄISCHE PATENTSCHRIFT

(11) **EP 1 814 691 B1**
(45) Veröffentlichungstag und Bekanntmachung des Hinweises auf die Patenterteilung: **08.08.2012**
(21) Anmeldenummer: 05814325.6
(22) Anmeldetag: 24.11.2005
(51) Int. Cl.: B23P 9/02, C21D 7/06, B24B 1/04

(54) **VERFAHREN UND VORRICHTUNG ZUR OBERFLÄCHENVERFESTIGUNG VON BAUTEILEN**
METHOD AND DEVICE FOR HARDENING THE SURFACES OF COMPONENTS
PROCEDE ET DISPOSITIF POUR RENFORCER DES PIECES A LEUR SURFACE

(30) Priorität: 02.12.2004 DE 102004058146
(43) Veröffentlichungstag der Anmeldung: 08.08.2007
(73) Patentinhaber: MTU Aero Engines GmbH, 80995 München (DE)
(72) Erfinder: BAMBERG, Joachim, 85221 Dachau (DE); HESSERT, Roland, 85229 Markt Indersdorf (DE); SATZGER, Wilhelm, 80804 München (DE)
(74) Vertreter: Söllner, Oliver
(86) Internationale Anmeldenummer: PCT/DE2005/002115
(87) Internationale Veröffentlichungsnummer: WO 2006/058518

(56) Entgegenhaltungen:
- DE-A1- 4 029 285
- DE-A1- 10 243 415
- DE-A1- 19 809 581
- US-A- 5 976 314
- US-A1- 2002 037 219
- PATENT ABSTRACTS OF JAPAN Bd. 2002, Nr. 11, 6. November 2002 (2002-11-06) & JP 2002 210569 A (MISHIMA DAIJI), 30. Juli 2002 (2002-07-30)
- SHARMA, A. (NIPPON INSTITUTE OF TECHNOLOGY) ET AL: "A new longitudinal mode ultrasonic transducer with an eccentric horn for micro machining." KEY ENGINEERING MATERIALS, Bd. 238-239, 2003, Seiten 147-152, XP009063959 Trans Tech Pub. Switzerland

## Beschreibung

Die Erfindung betrifft ein Verfahren zum Oberflächenverfestigen von Bauteilen gemäß dem Oberbegriff des Patentanspruchs 1.

Gasturbinenbauteile wie zum Beispiel Bauteile von Flugtriebwerken unterliegen im Betrieb hohen Belastungen, die zu einem Verschleiß und einem Versagen der Bauteile führen können. Da zum Beispiel Flugtriebwerke höchsten Anforderungen im Hinblick auf Zuverlässigkeit, Gewicht, Leistung, Wirtschaftlichkeit und Lebensdauer genügen müssen, müssen alle Optimierungspotentiale ausgenutzt werden. Hierzu gehört auch eine optimierte Ausnutzung der Potentiale von werkstoffen, aus welchen die Bauteile hergestellt sind. Dabei kommt insbesondere den Oberflächen der Bauteile eine besondere Bedeutung zu, da die Oberflächen bzw. Randschichten im Betrieb einer maximalen Beanspruchung ausgesetzt sind. So bilden die Oberflächen bzw. Randschichten meist den Ausgangsort beim versagen eines Bauteils. Zur optimierten Ausnutzung der Werkstoffpotentiale und zur Erhöhung der Lebensdauer von Bauteilen ist es aus dem Stand der Technik bereits bekannt, die Bauteile an ihren Oberflächen bzw. Randschichten zu verfestigen. Durch eine Oberflächenverfestigung der Bauteile kann demnach die Lebensdauer der Bauteile verlängert werden.

Nach dem Stand der Technik wird die Oberflächenverfestigung von Bauteilen vorzugsweise durch Kugelstrahlen vorgenommen. Beim Kugelstrahlen werden Kugeln mit Pressluft, mittels eines Schleuderrads oder auch mit Hilfe einer im Ultraschallfrequenzbereich schwingenden Sonotrode beschleunigt und auf eine zu verfestigende Oberfläche eines Bauteils gerichtet. Die zum Beispiel mit Hilfe der sonotrode beschleunigten Kugeln treffen im Sinne einer statistischen Verteilung auf die zu verfestigende Oberfläche des Bauteils und bewirken so eine gleichmäßige Verfestigung des Bauteils an der zu verfestigenden Oberfläche. Die von einer Sonotrode bereitgestellte Energie wird demnach beim Kugelstrahlen indirekt bzw. mittelbar über die Kugeln auf die zu verfestigende Oberfläche des zu strahlenden Bauteils übertragen.

Weiterhin ist es z. B. aus dem Dokument DE 102 43 415 A1 bereits bekannt, ein Bauteil im Bereich einer Oberfläche desselben dadurch zu verfestigen, dass ein mit einer Sonotrode versehenes Werkzeug im Sinne einer Vorschubbewegung relativ zu dem Bauteil bewegt wird, wobei das Werkzeug im Sinne einer hammerartigen Bewegung die Oberfläche des Bauteils direkt bzw. unmittelbar verfestigt. Dabei wird das Werkzeug derart zum Bauteil ausgerichtet, dass eine in Wirkrichtung des jeweiligen Werkzeugs verlaufende Werkzeugachse senkrecht zu der zu verfestigenden Oberfläche verläuft.

Das Dokument DE 40 29 285 A1 betrifft eine Anordnung zur Ultraschallbearbeitung durch Läppen, wobei ein mit einer Sonotrode gekoppelter werkzeugkopf eine harte Schutzschicht, bevorzugt aus Silizumnitrid aufweist.

Hiervon ausgehend liegt der vorliegenden Erfindung das Problem zu Grunde, ein neuartiges Verfahren zum Oberflächenverfestigen von Bauteilen zu schaffen, mit dem gezielte, vorzugsorientierte Verfestigungszustände bewirkt werden können.

Dieses Problem wird durch ein Verfahren zum Oberflächenverfestigen von Bauteilen im Sinne von Patentanspruch 1 gelöst. Erfindungsgemäß wird das oder jedes Werkzeug bei der Oberflächenverfestigung derart zu der zu verfestigenden Oberfläche des Bauteils ausgerichtet, dass eine in Wirkrichtung des jeweiligen Werkzeugs verlaufende werkzeugachse schräg zu der zu verfestigenden Oberfläche des Bauteils verläuft.

Im Sinne der hier vorliegenden Erfindung wird vorgeschlagen, das oder jedes im Ultraschallfrequenzbereich anregbare Werkzeugs bei der Oberflächenverfestigung derart zu der zu verfestigenden Oberfläche auszurichten, dass die Werkzeugachse des jeweiligen Werkzeugs schräg zu der zu verfestigenden Oberfläche verläuft. Bedingt durch diese Schrägstellung des Werkzeugs zu der zu verfestigenden Oberfläche und abhängig von der Bewegungsrichtung der Relativbewegung zwischen dem Bauteil und dem Werkzeug können gezielte, vorzugsorientierte Verfestigungszustände in der zu verfestigenden Oberfläche des Bauteils erzielt werden. Die Erfindung erlaubt eine schnelle, reproduzierbare, prozesssichere und wirtschaftliche Oberflächenverfestigung von Bauteilen an ebenen sowie gekrümmten Oberflächen derselben, einschließlich der Bearbeitung hoch beanspruchter Oberflächenbereiche, wie zum Beispiel von Bohrungen, Kanten oder Schweißnähten auch an dünnwandigen Bauteilen. Das im Ultraschallfrequenzbereich anregbare, mit einer Sonotrode versehene Werkzeug verfügt über eine an die zu verfestigenden Oberfläche angepasste Kontur bzw. Geometrie.

Die gezielte, vorzugsorientierte Verfestigung der Oberfläche des Bauteils kann sowohl entlang der Bauteiloberfläche als auch in Tiefenrichtung erfolgen. Durch geeignete Wahl der Prozessparameter ist es möglich eine hohe thermische und mechanische Stabilität der verfestigungszustände zu realisieren. Mit Hilfe des erfindungsgemäßen Verfahrens kann die statische und dynamische Festigkeit der Bauteile erhöht werden. Ebenso ist es möglich nanokristalline Randschichtgefüge zu erzeugen, die unter anderem die Verschleißschutzeigenschaften und das Korrosionsverhalten optimieren. Weiterhin kann durch gezielt eingebrachte, vorzugsorientierte Verfestigungszustände das Schwingungsverhalten von insbesondere dünnwandigen Bauteilen im Resonanzfrequenzbereich optimiert werden. Mit dem erfindungsgemäßen Verfahren zur Oberflächenverfestigung kann auch die Oberflächenrauhigkeit eines Bauteils reduziert oder die Oberfläche mit einer speziellen Mikroprofilierung versehen werden, um so eine strömungstechnische Optimierung der Bauteile zu erzielen.

Nach einer vorteilhaften weiterbildung der Erfindung wird bei der Oberflächenverfestigung ein dem Bauteil zugewandter werkzeugkopf mit einer Anpresskraft gegen die zu verfestigende Oberfläche des Bauteils gedrückt.

Vorzugsweise schließen bei der Oberflächenverfestigung die Werkzeugachse des jeweiligen Werkzeugs und die Oberfläche des Bauteils in dem Abschnitt, in welchem der Werkzeugkopf auf die zu verfestigende Oberfläche gedrückt wird, einen Winkel zwischen 10° und 80° ein, wobei die Anpresskraft des Werkzeugkopfs gegen die zu verfestigende Oberfläche des Bauteils zwischen 10 N und 100 N liegt, und wobei die Krafteinleitung mit einer Frequenz zwischen 15 kHz und 50 kHz erfolgt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung zur Verdeutlichung des erfindungsgemäßen Verfahrens zum Oberflächenverfestigen von Bauteilen; und
- Fig. 2: eine stark schematisierte Darstellung einer erfindungsgemäßen Vorrichtung zum Oberflächenverfestigen von Bauteilen.

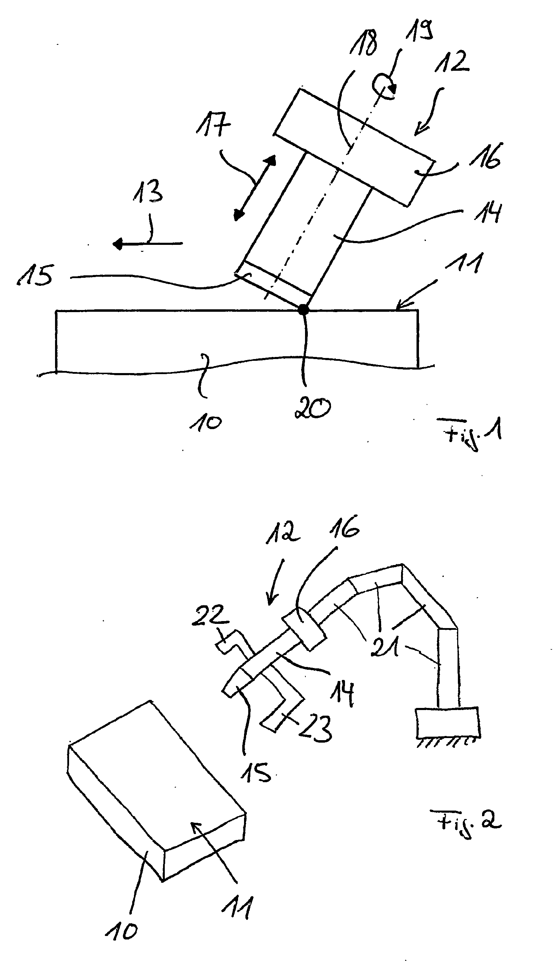

Nachfolgend wird die hier vorliegende Erfindung unter Bezugnahme auf Fig. 1 und 2 in größerem Detail beschrieben.

Fig. 1 zeigt eine schematisierte Ansicht eines Bauteils 10, wobei das Bauteil an einer Oberfläche 11 desselben einer Oberflächenverfestigung im Sinne der hier vorliegenden Erfindung unterzogen wird. Zur Oberflächenverfestigung des Bauteils 10 an der Oberfläche 11 dient ein sonotrodenar tiges Werkzeug 12, wobei zur Oberflächenverfestigung des Bauteils 10 eine Relativbewegung bzw. Vorschubbewegung zwischen dem Bauteil 10 und dem Werkzeug 12 etabliert wird. Vorzugsweise steht das zu bearbeitende Bauteil 10 still und das Werkzeug 12 wird relativ zum feststehenden Bauteil 10 bewegt. Fig. 1 visualisiert die Relativbewegung bzw. Vorschubbewegung zwischen dem feststehenden Bauteil 10 und dem bewegten Werkzeug 12 durch einen Pfeil 13.

Das sonotrodenartige Werkzeug 12 ist im Ultraschallfrequenzbereich anregbar und überträgt die Energie zur Verfestigung der Oberfläche 11 des Bauteils 10 unmittelbar auf die Oberfläche 11 des Bauteils 10. Das Werkzeug 12 umfasst eine Sonotrode 14 mit einem auf die zu verfestigende Oberfläche 11 einwirkenden Sonotrodenkopf 15, wobei die Anregung der Sonotrode 14 über einen piezokeramischen Aktuator 16 erfolgt. Der Aktuator 16 versetzt die Sonotrode 14 in Schwingung, wobei der Sonotrodenkopf 15 die Schwingungsenergie zur Verfestigung des Bauteils 10 auf die Oberfläche 11 desselben überträgt. Die Wirkrichtung der Sonotrode 14 bzw. des Werkzeugs 12 ist in Fig. 1 durch einen Doppelpfeil 17 visualisiert.

Im Sinne der hier vorliegenden Erfindung wird nun vorgeschlagen, das Werkzeug 12 bei der Oberflächenverfestigung des Bauteils 10 derart zu der zu verfestigenden Oberfläche 11 des Bauteils 10 auszurichten, dass eine in bzw. parallel zur Wirkrichtung (Pfeil 17) des Werkzeugs 12 verlaufende Werkzeugachse 18 schräg zu der zu verfestigenden Oberfläche 11 des Bauteils 10 bzw. schräg zur Richtung (Pfeil 13) der Relativbewegung bzw. Vorschubbewegung zwischen dem Bauteil 10 und dem Werkzeug 12 verläuft. Bei der Oberflächenverfestigung schließen die Werkzeugachse 18 des Werkzeugs 12 und die Oberfläche 11 des Bauteils 10 einen Winkel zwischen 10° und 80°, vorzugsweise einen Winkel zwischen 30° und 60°, ein. Während der Bearbeitung der gesamten Oberfläche 11 wird dieser Winkel zwischen der Werkzeugachse 18 und der Oberfläche 11 des Bauteils 10 vorzugsweise konstant gehalten. Liegt ein Bauteil mit einer gekrümmten Oberfläche vor, so muss hierzu gegebenenfalls das Werkzeug 12 entsprechend der Kontur der zu verfestigenden Oberfläche permanent verstellt werden.

Es ist auch möglich, die Oberfläche 11 des Bauteils 10 in unterschiedlichen Abschnitten derart zu bearbeiten, dass in den unterschiedlichen Abschnitten die Oberflächenverfestigung mit unterschiedlichen Winkeln zwischen der Werkzeugachse 18 und der Oberfläche 11 des Bauteils 10 durchgeführt wird. Weiterhin kann die Bewegungsrichtung der Relativbewegung bzw. Vorschubbewegung zwischen dem Werkzeug 12 und dem Bauteil 10 verändert werden. Hierdurch ist es möglich, in unterschiedlichen Abschnitten des Bauteils unterschiedliche Verfestigungszustände der Oberfläche 11 des Bauteils 10 zu realisieren.

Im Sinne der hier vorliegenden Erfindung wird bei der Obarflächenverfestigung des Bauteils 10 der dem Bauteil 10 zugewandte Werkzeugkopf des Werkzeugs bzw. Sonotrodenkopf 15 der Sonotrode 14 mit einer Anpresskraft gegen die zu verfestigende Oberfläche 11 des Bauteils 10 gedrückt. Die Anpresskraft des Werkzeugs 12 gegen die Oberfläche 11 des Bauteils 10 liegt in einer Größenordnung zwischen 10 N und 100 N. Bei der Oberflächenverfestigung wird das Werkzeug 12 zur Krafteinleitung mit einer Frequenz zwischen 15 kHz und 50 kHz angeregt. Vorzugsweise beträgt die Frequenz zur Anregung des Werkzeugs 20 kHz. Bei einer derart hohen Frequenz für die Krafteinleitung bei der Oberflächenverfestigung stellen selbst dünnwandige Bauteile eine derart große Trägheitsmasse dar, dass mit geringen Anpresskräften eine gute Oberflächenverfestigung durchgeführt werden kann, ohne die Geometrie der Bauteile unzulässig zu verändern. Damit können zum Beispiel dünne Schaufelblätter von Gasturbinenschaufeln hoch genau verfestigt werden.

Bei der Oberflächenverfestigung erfolgt die Relativbewegung zwischen dem Bauteil 10 und dem Werkzeug 12 vorzugsweise mit einer Relativgeschwindigkeit, die zwischen 1 mm/s und 1000 mm/s liegt. Die Masse der Sonotrode 14, die unmittelbar über den Sonotrodenkopf 15 auf die zu verfestigende Oberfläche 11 des Bauteils 10 einwirkt, liegt vorzugsweise in der Größenordnung zwischen 0,1 kg und 1 kg.

Im Sinne des erfindungsgemäßen Verfahrens erfolgt demnach das Oberflächenverfestigen eines Bauteils dadurch, dass ein sonotrodenartiges Werkzeug mit einer bestimmten Anpresskraft gegen eine zu verfestigende Oberfläche des Bauteils derart gepresst wird, dass eine Werkzeugachse des Werkzeugs schräg zu einer Oberfläche des Bauteils sowie schräg zu einer Bewegungsrichtung des Werkzeugs verläuft. Hierdurch können in der zu verfestigenden Oberfläche des Bauteils gezielt vorzugsorientierte Verfestigungszustände erzeugt werden.

Zur Minimierung des Verschleißes des Werkzeugkopfs bzw. Sonotrodenkopfes 15 bei der Oberflächenverfestigung des Bauteils 10 ist der Werkzeugkopf 15 gepanzert ausgeführt. Dies kann durch Verwendung hoch fester Einsätze, zum Beispiel aus Wolfram-Carbid, oder durch die Beschichtung des Werkzeugkopfes 15 mit zum Beispiel Titan-Nitrit erfolgen. Abhängig von den gewünschten Verfestigungszuständen innerhalb der zu verfestigenden Oberfläche 11 ist der Werkzeugkopf 15 punktartig oder linienartig oder flächig profiliert.

Das im Ultraschallfrequenzbereich anregbare, sonotrodenartige Werkzeug 12 bzw. der Sonotrodenkopf 15 verfügt vorzugsweise über eine an die zu verfestigenden Oberfläche angepasste Geometrie.

Bei der Oberflächenverfestigung des Bauteils 10 an der Oberfläche 11 desselben kann das Werkzeug 12 bzw. die Sonotrode 14 um die Werkzeugachse 18 rotieren. Diese Drehbewegung ist in Fig. 1 durch den Pfeil 19 visualisiert. Die Drehung des Werkzeugs 12 um die Werkzeugachse 18 bei der Oberflächenverfestigung des Bauteils 10 verfügt über den Vorteil, dass sich ein Kontaktpunkt 20 zwischen dem Werkzeugkopf 15 und der Oberfläche 11 des Bauteils 10 fortlaufend ändert. Hierdurch unterliegt der Werkzeugkopf 15 einem gleichmäßigeren Verschleiß als bei einem nicht-rotierenden Werkzeug 12.

Bei der Oberflächenverfestigung kann zwischen dem Werkzeug 12 und dem Bauteil 10 eine elektrische Spannung angelegt werden. Hierdurch ist bei der Oberflächenverfestigung eine Erwärmung des Bauteils 10 im Kontaktpunkt 20 möglich, wodurch die Verfestigungswirkung optimiert werden kann.

Im Sinne der hier vorliegenden Erfindung kann, wie bereits erwähnt, ein Bauteil in unterschiedlichen Abschnitten seiner zu verfestigenden Oberfläche mit unterschiedlichen Schrägstellungen des Werkzeugs gegenüber dem Bauteil verfestigt werden. Weiterhin kann die Bewegungsrichtung der Relativbewegung zwischen dem Bauteil und dem Werkzeug angepasst werden. Durch mehrmaliges, gegebenenfalls sich überkreuzendes, Oberflächenverfestigen mit unterschiedlichen Schrägestellungen zwischen Werkzeug und Bauteil können so genau angepasste Verfestigungszustände im Bauteil erzeugt werden. Weiterhin kann die Verfestigung des Bauteils mit mehreren sonotrodenartigen, vorzugsweise phasengesteuerten, Werkzeugen erfolgen.

Zur Bereitstellung der relativen Beweglichkeit des Werkzeugs 12 gegenüber dem an seiner Oberfläche 11 zu verfestigenden Bauteil 10 ist das Werkzeug 12 gemäß Fig. 2 an einem Bewegungsmanipulator 21, vorzugsweise an einem Roboter, gelagert. Mit Hilfe des Bewegungsmanipulators 21 kann das Werkzeug 12 bzw. der Werkzeugkopf 15 beliebig im Raum verfahren und demnach beliebig zu der zu verfestigenden Oberfläche 11 des Bauteils 10 ausgerichtet werden. Im Ausführungsbeispiel der Fig. 2 ist dem Werkzeug 12 ein sogenanntes Liniengeneratorsystem 22 zugeordnet, mit Hilfe dessen die Wirkrichtung des Werkzeugs 12 auf der Oberfläche 11 des Bauteils 10 sichtbar gemacht werden kann. Die Ausrichtung dieser Wirkrichtung auf einen Kontaktpunkt auf der Oberfläche 11 des Bauteils 10 kann zum Beispiel über ein Kamerasystem 23 realisiert werden. Ist eine hoch präzise Winkelausrichtung der Wirkrichtung erforderlich, so kann dies über ein spezielles Winkelmesssystem mit einem drehbaren Autokollimationsfernrohr und einem drehbaren Spiegel realisiert werden.

Bei der Oberflächenverfestigung können auch Schwingungsformen des jeweiligen Werkzeugs 12 genutzt werden, deren Wirkrichtung nicht parallel zur Anregungsrichtung des jeweiligen Werkzeugs verläuft. Hierbei es sich um Biegeschwingungen der Sonotrode handeln.

Mit dem erfindungsgemäßen Verfahren sowie der erfindungsgemäßen Vorrichtung können lokal begrenzte, definierte, vorzugsorientierte Verfestigungszustände in eine zu verfestigende Oberfläche eines Bauteils eingebracht werden. Die Verfestigungszustände können an die Geometrie und Hauptbelastungsrichtung des Bauteils angepasst werden. Es können definierte Verfestigungsmuster auf der Oberfläche eines Bauteils realisiert werden. Mit Hilfe des erfindungsgemäßen Verfahrens kann die Schwingfestigkeit sowie Lebensdauer der Bauteile erhöht werden. Dies gilt sowohl für die LCF- Lebensdauer als auch für die HCF-Lebensdauer des Bauteils.

## Patentansprüche

1. Verfahren zum Oberflächenverfestigen von Bauteilen, insbesondere von Gasturbinenbauteilen, wobei zur verfestigung einer Oberfläche eines Bauteils eine Relativbewegung zwischen dem Bauteil und mindestens einem im ultraschallfrequenzbereich angeregten Werkzeug erfolgt, und wobei das Werkzeug einen Aktuator, eine Sonotrode sowie einen für den Bauteilkontakt punktartig, linienartig oder flächig profilierten Werkzeugkopf aufweist,
**dadurch gekennzeichnet,**
**dass** das oder jedes Werkzeug (12) bei der Oberflächenverfestigung derart zu der zu verfestigenden Oberfläche (11) des Bauteils (10) ausgerichtet wird, dass eine in Wirkrichtung des jeweiligen Werkzeugs verlaufende Werkzeugachse (18) schräg zu der zu verfestigenden Oberfläche (11) des Bauteils verläuft.

2. Verfahren nach Anspruch 1,
**dadurch gekennzeichnet,**
**dass** die in Wirkrichtung (17) des jeweiligen Werkzeugs (12) verlaufende Werkzeugachse (18) schräg zu der zu verfestigenden Oberfläche (11) des Bauteils (10) und schräg zur Richtung (13) der Relativbewegung zwischen dem Bauteil (10) und dem jeweiligen Werkzeug (12) verläuft.

3. Verfahren nach Anspruch 1 oder 2,
**dadurch gekennzeichnet,**
**dass** bei der Oberflächenverfestigung die Werkzeugachse (18) des jeweiligen Werkzeugs (12) und die Oberfläche (11) des Bauteils (10) in dem Abschnitt, in welchem der Werkzeugkopf (15) auf die zu verfestigende Oberfläche (11) gedrückt wird, einen Winkel zwischen 10° und 80° einschließen.

4. Verfahren nach Anspruch 3,
**dadurch gekennzeichnet,**
**dass** bei der Oberflächenverfestigung die Werkzeugachse (18) des jeweiligen Werkzeugs (12) und die Oberfläche (11) des Bauteils (10) in dem Abschnitt, in welchem der Werkzeugkopf (15) auf die zu verfestigende Oberfläche (11) gedrückt wird, einen Winkel zwischen 30° und 60° einschließen.

5. Verfahren nach einem der Ansprüche 1 bis 4,
**dadurch gekennzeichnet,**
**dass** bei der Oberflächenverfestigung ein dem Bauteil (10) zugewandter Werkzeugkopf (15) des jeweiligen Werkzeugs (12) mit einer Anpresskraft gegen die zu verfestigende Oberfläche (11) des Bauteils (10) gedrückt wird.

6. verfahren nach Anspruch 5,
**dadurch gekennzeichnet,**
**dass** der Werkzeugkopf (15) des jeweiligen Werkzeugs (12) mit einer Anpresskraft zwischen 10 N und 100 N gegen die zu verfestigende Oberfläche (11) des Bauteils (10) gedrückt wird.

7. Verfahren nach einem der Ansprüche 1 bis 6,
**dadurch gekennzeichnet,**
**dass** bei der Oberflächenverfestigung eine Krafteinleitung durch das jeweilige Werkzeug (12) mit einer Frequenz von 15 kHz bis 50 kHz erfolgt.

8. Verfahren nach einem der Ansprüche 1 bis 7,
**dadurch gekennzeichnet,**
**dass** bei der Oberflächenverfestigung die Relativbewegung zwischen dem Bauteil (10) und dem jeweiligen Werkzeug (12) mit einer Relativgeschwindigkeit zwischen 1 mm/s und 1000 mm/s erfolgt.

9. Verfahren nach einem der Ansprüche 1 bis 8,
**dadurch gekennzeichnet,**
**dass** bei der Oberflächenverfestigung das Bauteil (10) stillsteht und das jeweilige Werkzeug (12) relativ zum Bauteil (10) bewegt wird, derart, dass bei der gesamten Oberflächenverfestigung der Winkel zwischen der Werkzeugachse (18) und der zu verfestigenden Oberfläche (11) konstant ist.

10. Verfahren nach einem der Ansprüche 1 bis 9,
**dadurch gekennzeichnet,**
**dass** bei der Oberflächenverfestigung das jeweilige Werkzeug(12)um seine in Wirkrichtung des Werkzeugs (12) verlaufende Werkzeugachse (18) gedreht wird (19).

11. Verfahren nach einem der Ansprüche 1 bis 10,
**dadurch gekennzeichnet,**
**dass** bei der Oberflächenverfestigung Schwingungsformen des jeweiligen Werkzeugs (12) genutzt werden, deren Wirkrichtung nicht parallel zur Anregungsrichtung (18) des jeweiligen Werkzeugs (12) verläuft.

12. Verfahren nach einem der Ansprüche 1 bis 11,
**dadurch gekennzeichnet,**
**dass** bei der Oberflächenverfestigung eine elektrische Spannung zwischen dem Bauteil (10) und dem jeweiligen Werkzeug(12) angelegt wird.

13. Verfahren nach einem der Ansprüche 1 bis 12,
**dadurch gekennzeichnet,**
**dass** die zu verfestigende Oberfläche (11) des Bauteils (10) mehrfach vom Werkzeug (12) bearbeitet wird, insbesondere mit unterschiedlichen Winkeln zwischen der Werkzeugachse (18) und der zu verfestigenden Oberfläche (11) und/oder mit unterschiedlichen Bewegungsrichtungen (13) zwischen Werkzeug (12) und Bauteil (10).

## Claims

1. Method for hardening the surfaces of components, in particular gas-turbine components, wherein in order to harden a surface of a component a relative movement is effected between the component and at least one tool excited in the ultrasonic-frequency range, and wherein the tool has an actuator, a sonotrode and also a tool head that is profiled in a punctiform, linear or areal manner for the component contact,
**characterised in that**
during the surface-hardening the or each tool (12) is aligned in such a way with respect to the surface (11) of the component (10) that is to be hardened that a tool axis (18) extending in the effective direction of the respective tool extends obliquely to the surface (11) of the component that is to be hardened.

2. Method according to claim 1,
**characterised in that**
the tool axis (18) extending in the effective direction (17) of the respective tool (12) extends obliquely to the surface (11) of the component (10) that is to be hardened and obliquely to the direction (13) of the relative movement between the component (10) and the respective tool (12).

3. Method according to claim 1 or 2,
**characterised in that**
during the surface-hardening the tool axis (18) of the respective tool (12) and the surface (11) of the component (10) enclose an angle between 10° and 80° in the section in which the tool head (15) is pressed onto the surface (11) that is to be hardened.

4. Method according to claim 3,
**characterised in that**
during the surface-hardening the tool axis (18) of the respective tool (12) and the surface (11) of the component (10) enclose an angle between 30° and 60° in the section in which the tool head (15) is pressed onto the surface (11) that is to be hardened.

5. Method according to one of claims 1 to 4,
**characterised in that**
during the surface-hardening a tool head (15) of the respective tool (12) that faces the component (10) is pressed with a contact pressure against the surface (11) of the component (10) that is to be hardened.

6. Method according to claim 5,
**characterised in that**
the tool head (15) of the respective tool (12) is pressed with a contact pressure between 10 N and 100 N against the surface (11) of the component (10) that is to be hardened.

7. Method according to one of claims 1 to 6,
**characterised in that**
during the surface-hardening a force is introduced by means of the respective tool (12) with a frequency of 15 kHz to 50 kHz.

8. Method according to one of claims 1 to 7,
**characterised in that**
during the surface-hardening the relative movement between the component (10) and the respective tool (12) is effected with a relative speed between 1 mm/s and 1000 mm/s.

9. Method according to one of claims 1 to 8,
**characterised in that**
during the surface-hardening the component (10) stands still and the respective tool (12) is moved relatively to the component (10) in such a way that throughout the surface-hardening the angle between the tool axis (18) and the surface (11) that is to be hardened is constant.

10. Method according to one of claims 1 to 9,
**characterised in that**
during the surface-hardening the respective tool (12) is rotated (19) about its tool axis (18) extending in the effective direction of the tool (12).

11. Method according to one of claims 1 to 10,
**characterised in that**
during the surface-hardening vibrational modes of the respective tool (12) are used, the effective direction of which does not extend parallel to the direction of excitation (18) of the respective tool (12).

12. Method according to one of claims 1 to 11,
**characterised in that**
during the surface-hardening a voltage is applied between the component (10) and the respective tool (12).

13. Method according to one of claims 1 to 12,
**characterised in that**
the surface (11) of the component (10) that is to be hardened is processed several times by the tool (12), in particular with different angles between the tool axis (18) and the surface (11) that is to be hardened and/or with different directions of movement (13) between the tool (12) and the component (10).

## Revendications

1. Procédé de durcissement superficiel de pièces, en particulier de composants de turbines à gaz, où, pour le durcissement d'une surface d'une pièce, un déplacement relatif est établi entre la pièce et au moins un outil excité dans la plage de fréquences ultrasonores, et où l'outil comprend un actionneur, une sonotrode ainsi qu'une tête d'outil pour un contact avec la pièce et profilée ponctuellement, linéairement ou superficiellement,
**caractérisé**
**en ce que** pendant le durcissement superficiel, le ou les outils (12) sont dirigés vers la surface (11) à durcir de la pièce (10), de telle manière qu'un axe (18) d'outil s'étendant dans la direction d'action de l'outil correspondant soit oblique par rapport à la surface (11) à durcir de la pièce.

2. Procédé selon la revendication 1,
**caractérisé**
**en ce que** l'axe (18) d'outil s'étendant dans la direction d'action (17) de l'outil (12) correspondant est oblique par rapport à la surface (11) à durcir de la pièce (10) et oblique par rapport à la direction (13) du déplacement relatif entre la pièce (10) et l'outil (12) correspondant.

3. Procédé selon la revendication 1 ou la revendication 2,
**caractérisé**
**en ce que** pendant le durcissement superficiel, l'axe (18) de l'outil (12) correspondant et la surface (11) de la pièce (10) forment un angle compris entre 10° et 80° dans la zone où la tête d'outil (15) appuie sur la surface (11) à durcir.

4. Procédé selon la revendication 3,
**caractérisé**
**en ce que** pendant le durcissement superficiel, l'axe (18) de l'outil (12) correspondant et la surface (11) de la pièce (10) forment un angle compris entre 30° et 60° dans la zone où la tête d'outil (15) appuie sur la surface (11) à durcir.

5. Procédé selon l'une des revendications 1 à 4,
**caractérisé**
**en ce que** pendant le durcissement superficiel, une tête (15) de l'outil (12) correspondant dirigée vers la pièce (10) appuie contre la surface (11) à durcir de la pièce (10) avec une force d'appui.

6. Procédé selon la revendication 5,
**caractérisé**
**en ce que** la tête (15) de l'outil (12) correspondant appuie sur la surface (11) à durcir de la pièce (10) avec une force d'appui comprise entre 10 N et 100 N.

7. Procédé selon l'une des revendications 1 à 6,
**caractérisé**
**en ce que** pendant le durcissement superficiel, une application de force est effectuée par l'outil (12) correspondant à une fréquence comprise entre 15 kHz et 50 kHz.

8. Procédé selon l'une des revendications 1 à 7,
**caractérisé**
**en ce que** pendant le durcissement superficiel, le déplacement relatif entre la pièce (10) et l'outil (12) correspondant est exécuté avec une vitesse relative comprise entre 1 mm/s et 1000 mm/s.

9. Procédé selon l'une des revendications 1 à 8,
**caractérisé**
**en ce que** pendant le durcissement superficiel, la pièce (10) est à l'arrêt et l'outil (12) correspondant est déplacé par rapport à la pièce (10), de telle manière que l'angle entre l'axe (18) d'outil et la surface (11) à durcir reste constant pendant tout le durcissement superficiel.

10. Procédé selon l'une des revendications 1 à 9,
**caractérisé**
**en ce que** pendant le durcissement superficiel, l'outil (12) correspondant subit une rotation (19) autour de son axe (18) d'outil s'étendant dans la direction d'action de l'outil (12).

11. Procédé selon l'une des revendications 1 à 10,
**caractérisé**
**en ce que** pendant le durcissement superficiel, des formes de vibrations de l'outil (12) correspondant sont utilisées, dont la direction d'action ne s'étend pas parallèlement à la direction d'excitation (18) de l'outil (12) correspondant.

12. Procédé selon l'une des revendications 1 à 11,
**caractérisé**
**en ce que** pendant le durcissement superficiel, une tension électrique est appliquée entre la pièce (10) et l'outil (12) correspondant.

13. Procédé selon l'une des revendications 1 à 12,
**caractérisé**
**en ce que** la surface (11) à durcir de la pièce (10) est usinée plusieurs fois par l'outil (12), en particulier avec des angles différents entre l'axe (18) d'outil et la surface (11) à durcir et/ou avec des directions de déplacement (13) différentes entre l'outil (12) et la pièce (10).
